# EUROPÄISCHE PATENTSCHRIFT

(11) **EP 2 906 445 B1**
(45) Veröffentlichungstag und Bekanntmachung des Hinweises auf die Patenterteilung: **27.07.2016**
(21) Anmeldenummer: 13776417.1
(22) Anmeldetag: 09.10.2013
(51) Int. Cl.: B60Q 1/56

(54) **BELEUCHTUNGSEINRICHTUNG FÜR DAS HINTERE KENNZEICHENSCHILD EINES KRAFTFAHRZEUGS**
ILLUMINATION DEVICE FOR THE REAR LICENSE PLATE OF A MOTOR VEHICLE
DISPOSITIF D'ÉCLAIRAGE DE LA PLAQUE D'IMMATRICULATION ARRIÈRE D'UN VÉHICULE AUTOMOBILE

(30) Priorität: 10.10.2012 DE 102012019847
(43) Veröffentlichungstag der Anmeldung: 19.08.2015
(73) Patentinhaber: Audi AG, 85045 Ingolstadt (DE)
(72) Erfinder: PICKL, Richard, 85095 Denkendorf (DE)
(74) Vertreter: Lehle, Josef
(86) Internationale Anmeldenummer: PCT/EP2013/003024
(87) Internationale Veröffentlichungsnummer: WO 2014/056607

(56) Entgegenhaltungen:
- EP-A2- 0 587 501
- WO-A1-2005/005195
- DE-A1-102011 016 414
- FR-A1- 2 887 506
- JP-U- S5 324 272

## Beschreibung

Die Erfindung betrifft ein Kraftfahrzeug mit einer Beleuchtungseinrichtung für ein hinteres Kennzeichenschild des Kraftfahrzeugs nach dem Oberbegriff des Anspruchs 1.

Ein solches allgemein bekanntes Kraftfahrzeug mit einer Beleuchtungseinrichtung besteht aus einem hinteren, das Kennzeichenschild tragenden Karosseriewandbereich als Trägerwand und einem an die Trägerwand anschließenden Wandbereich als Überstand, der oberhalb des Kennzeichenschildes mit etwa horizontaler Fläche nach hinten absteht. An den Überstand schließt sich nach oben hin ein Karosseriewandbereich als Oberwand an.

Im Überstand ist wenigstens ein Ausschnitt mit darüber liegender, einschaltbarer Lichtquelle vorgesehen, wobei der Ausschnitt von einer lichtdurchlässigen Lichtscheibe abgedeckt ist. Dabei überdeckt die Lichtscheibe mit einem umlaufenden Überdeckungsrand von unten her einen den Ausschnitt umgebenden Anlagerand und ist dort anliegend befestigt. Zur Befestigung ist eine Klippbefestigung der Lichtscheibe im Ausschnitt allgemein bekannt.

Der Überstand ist so ausgebildet, dass der Anlagerand des Ausschnitts lichtundurchlässig ist. Entsprechend wird der dort anliegende Überdeckungsrand der Lichtscheibe von der eingeschalteten Lichtquelle nicht durchstrahlt und ist somit so dunkel, dass er zur Beleuchtung des Kennzeichenschilds praktisch nicht beiträgt.

Ähnlich ist die Situation, wenn der "Ausschnitt" durch ein nach unten offenes Leuchtengehäuse gebildet ist, welches von unten her durch eine Lichtscheibe entsprechend abgedeckt wird, wobei dann gegebenenfalls der Anlagerand vom Leuchtengehäuse gebildet wird. Auch dieser Fall soll unter den verwendeten Begriff "Ausschnitt" fallen.

Für eine solche Beleuchtungseinrichtung für das hintere Kennzeichenschild eines Kraftfahrzeugs bestehen detaillierte rechtliche Vorgaben, insbesondere hinsichtlich des Lichteinfallswinkels und der Leuchtdichte, die von Fahrzeugherstellern einzuhalten sind (Amtsblatt der Europäischen Union L/35 vom 31.01.2009, Regel Nr. 4 der Wirtschaftskommission der Vereinten Nationen für Europa - einheitliche Bedingungen für die Genehmigung der Beleuchtungseinrichtungen für das hintere Kennzeichenschild von Kraftfahrzeugen und ihren Anhängern).

Insbesondere ist ein Lichteinfallswinkel von wenigstens 8° auf das Kennzeichenschild vorgeschrieben, der dazu führt, dass bei der vorstehenden, gattungsgemäßen Beleuchtungseinrichtung dieser Winkel nur eingehalten werden kann, wenn der Überstand relativ groß ist und das Kennzeichenschild etwa 7 cm vertieft im Heck eingebaut wird. Dabei wird der Winkel von 8° meist konstruktiv genau eingehalten, da ein größerer Winkel zu einer noch größeren Vertiefung führen würde.

Ein solcher relativ großer Überstand stört im Design und kann zudem als Schmutzfänger wirken und gegebenenfalls den c_{w}-Wert ungünstig beeinflussen.

Aus der DE 10 2006 018 259 A1 ist keine karosserieseitige Lösung, sondern lediglich ein durch ein separates Bauteil gebildeter Kennzeichenhalter mit integrierter Beleuchtung bekannt, der dann entsprechend karosserieseitig montiert wird. Darüber hinaus beschreibt diese Druckschrift explizit, dass das von der jeweiligen LED erzeugte Licht mittels eines Reflektors gezielt auf eine Lichtleiterleiste gerichtet wird, an welcher Lichtleiterleiste das Licht dann an einer begrenzten Einkoppelfläche in die Lichtleiterleiste eingekoppelt wird. In Verbindung mit einer zweiten Ausführungsform wird beschrieben, dass auf der den LED's abgewandten Fläche der Lichtleiterleiste eine vorbestimmte Lichtaustrittsfläche mit einer Optikstruktur ausgebildet sein soll, die von den LED's emittiertes Licht auf die Aufnahmeplatte richtet. Diese Optikstruktur ist lediglich in einem mittleren Bereich der Lichtleiterleiste vorgesehen.

Weiter zeigt die JP-A-2000168438 einen Aufbau, bei dem das Leuchtengehäuse komplett innerhalb eines karosserieseitigen Ausschnitts angeordnet ist.

Die DE 10 2005 028 694 A1 offenbart einen zweiten Reflektor, der lediglich dazu dient, das von einer LED emittierte Licht in einer, dort in der Fig. 8 dargestellten Weise nach vertikal unten zu lenken. Als einzige lichtleitende bzw. lichtlenkende Maßnahme ist eine sogenannte Diffusionsstufe vorgesehen, die bewirkt, dass von einem ersten Reflektor nach unten abgelenktes Licht nochmals so gebrochen wird, dass der obere Teilbereich bzw. obere Kantenbereich des Kennzeichens ausgeleuchtet wird.

Die DE 201 12 696 U1 betrifft lediglich eine Griffleiste, in die zur Kennzeichenschildbeleuchtung ein Beleuchtungskörper integriert ist. Das Licht dringt durch eine herkömmliche Fensterscheibe nach außen.

Die JP-A-2000 168 438 zeigt einen Aufbau, bei dem in einem horizontalen Karosseriewandbereich unmittelbar oberhalb des Kennzeichenschilds eine karosserieseitige Ausnehmung vorgesehen ist, durch die von innen her eine Leuchte designtechnisch ungünstig nach außen abragt. Diese Leuchte ist von einer Schutzabdeckung U-förmig ummantelt, wobei an der Unterseite eine Lichtaustrittsscheibe vorgesehen ist. Einen ähnlichen Aufbau zeigt die US 2009/019 60 59 A1, die in einer Abdeckung eine Ausnehmung aufweist, durch die hindurch Licht auf das Kennzeichenschild fallen kann. Weiter ist dort eine Streulinse vorgesehen, die beabstandet oberhalb der Lichtscheibe angeordnet ist und die das Licht nach unten streut.

Die DE 40 13 503 A1 betrifft ebenfalls einen vollkommen anderen konzeptionellen Aufbau als eingangs beschrieben. Konkret ragt hier ein Gehäuse im Bereich eines Überstandes nach unten in Richtung Kennzeichenschild ab, wobei im nach unten überragenden Teil eine Lichtscheibe eingesetzt ist. Ein derartiger Aufbau ist desingtechnisch nachteilig, verursacht unerwünschte Pfeifgeräusche und eignet sich als Schmutzfänger.

Die DE 102 40 663 A1 betrifft ebenfalls lediglich einen Kennzeichenhalter als solches, in welchen randseitig LED's integriert sind.

Die DE 20 2005 014 363 U1 weist einen Aufbau auf, bei dem in einen karosserieseitigen Überstand und in den dortigen Ausschnitt ein Leuchtengehäuse eingeclipst ist. Dieses Leuchtengehäuse trägt eine Lichtaustrittsscheibe, oberhalb der unmittelbar unterhalb eines Leuchtmittels ein Optikelement angeordnet ist, das das Licht so brechen bzw. streuen soll, dass das gesamte Kennzeichenschild ausgeleuchtet wird.

Die DE 20 2006 009 627 U1 zeigt in der Fig. 2, dass eine hintere Optikstruktur so ausgebildet werden soll, dass das von einer LED kommende Licht lediglich nach senkrecht unten abgeleitet wird.

Ein gattungsgemäßes Kraftfahrzeug mit einer Beleuchtungseinrichtung für ein hinteres Kennzeichenschild des Kraftfahrzeugs ist aus JPS53024272U bekannt.

Aufgabe der Erfindung ist es daher, eine gattungsgemäße Beleuchtungseinrichtung so weiterzubilden, dass bei Einhaltung der gesetzlichen Vorgaben für den Lichteinfallswinkel die Tiefe des Überstands reduzierbar ist.

Diese Aufgabe wird mit den Merkmalen des Anspruchs 1 gelöst. Vorteilhafte Ausführungsformen sind Gegenstand der darauf rückbezogenen Unteransprüche.

Gemäß Anspruch 1 ist ein Kraftfahrzeug mit einer Beleuchtungseinrichtung für ein hinteres Kennzeichenschild des Kraftfahrzeugs vorgesehen, das einen das Kennzeichenschild tragenden Karosseriewandbereich als Trägerwand aufweist, an die sich ein, einen Überstand ausbildender Karosseriewandbereich anschließt, der in Fahrzeughochachsenrichtung oberhalb des Kennzeichenschildes mit etwa horizontaler Fläche nach hinten absteht. Ferner ist wenigstens ein überstandseitigen Ausschnitt mit darüber liegender, einschaltbarer Lichtquelle vorgesehen, wobei der Ausschnitt von einer lichtdurchlässigen Lichtscheibe dergestalt abgedeckt ist, dass die Lichtscheibe mit einem Überdeckungsrand von unten her einen den Ausschnitt umgebenden Anlagerand überdeckt und dort anliegend befestigt ist. Ein von der Lichtquelle durch die Lichtscheibe abgestrahltes Licht wird hier mit vorbestimmter Leuchtdichte durch die Fläche innerhalb des Überdeckungsrands zum Kennzeichenschild abgestrahlt. Erfindungsgemäß ist vorgesehen, dass die Lichtscheibe wenigstens ein lichtleitendes und/oder lichtlenkendes Element aufweist, das so angeordnet und/oder ausgebildet ist, dass auch Licht in zumindest einen Teilbereich des in Fahrtrichtung hinteren Überdeckungsrands der Lichtscheibe geleitet und von dort ebenfalls mit vorbestimmter Leuchtdichte zum Kennzeichenschild hin abgestrahlt wird.

Mit dieser Maßnahme wird erreicht, dass der in Fahrtrichtung hintere bzw. hinterste Überdeckungsrand der Lichtscheibe Licht abstrahlt und somit bei der Messung des erforderlichen Lichteinfallswinkels mit herangezogen werden kann, wodurch die Überstandstiefe vorteilhaft reduziert werden kann.

Gemäß einer besonders bevorzugten konkreten Ausgestaltung wird vorgeschlagen, dass das wenigstens eine lichtleitende und/oder lichtlenkende Element durch wenigstens ein, an wenigstens einer Oberfläche der Lichtscheibe angeformte und/oder angebrachte und/oder ins Material der Lichtscheibe integrierte Lichtstreustruktur, insbesondere durch wenigstens eine prismatische Struktur, gebildet ist, mit der Licht seitlich in zumindest einen Teilbereich des hinteren Überdeckungsrandes ablenkbar ist, von welchem ausgehend das Licht in Richtung zum Kennzeichenschild hin abstrahlbar ist. Dabei sind die gesetzlichen Vorgaben für die Leuchtdichte zu berücksichtigen.

Für die Bestimmung des vorgeschriebenen Lichteinfallswinkels ist es ersichtlich ausreichend, wenn die lichtleitenden und/oder lichtlenkenden Maßnahmen nur zur Ausleuchtung des hinteren Überdeckungsrandes oder eines Teilbereichs des hinteren Überdeckungsrandes führen. Dabei sind die gesetzlichen Vorgaben hinsichtlich der Leuchtdichte auch für den hinteren Überdeckungsrand zu berücksichtigen.

Weiter kann vorgesehen sein, dass der hintere Überdeckungsrand, vorzugsweise ein im wesentlichen geradlinig und/oder in Fahrzeugquerrichtung verlaufender Überdeckungsrand, wenigstens einen von diesem fingerartig in Fahrtrichtung nach hinten abragenden Vorsprung aufweist, in den Licht eingeleitet und von dem aus Licht mit vorbestimmter Leuchtdichte zum Kennzeichenschild abstrahlbar ist. Eine derartige Fingerlösung lässt sich fertigungstechnisch einfach und mit wenig Aufwand realisieren,' zum Beispiel dergestalt, dass der hintere Überdeckungsrand in wenigstens einem definierten Bereich, zum Beispiel im mittleren Bereich, in Fahrtrichtung nach hinten verlängert wird (und entsprechend auch zum Beispiel eine anlagerandseitige, den Vorsprung aufnehmende Aussparung vorgesehen wird), so dass dann dieser Vorsprung bzw. dessen in Fahrtrichtung hintere Kante den Bezugspunkt für die Bestimmung des Lichteinfallswinkels bildet. Insgesamt kann dadurch die Überstandstiefe auf besonders einfache und/oder preisgünstige Weise reduziert werden.

Besonders bevorzugt ist weiter eine Ausführungsform, bei der das wenigstens eine lichtleitende und/oder lichtlenkende Element so ausgebildet und/oder angeordnet ist, dass das Licht in den gesamten hinteren Überdeckungsrand mitsamt dem wenigstens einen Vorsprung eingeleitet wird. Alternativ kann aber auch vorgesehen sein, dass das Licht nur in den, dem wenigstens einen Vorsprung zugeordneten Bereich des hinteren Überdeckungsrandes eingeleitet wird. Derartige Variationsmöglichkeiten erhöhen somit vorteilhaft die konstruktive Flexibilität bei der konkreten Planung und Ausgestaltung der erfindungsgemäßen Beleuchtungseinrichtung.

Um die Überstandstiefe so weit wie möglich zu reduzieren ist gemäß einer besonders bevorzugten Ausführungsform vorgesehen, dass eine in Fahrtrichtung hintere oder hinterste Kante des hinteren Überdeckungsrandes, vorzugsweise ein fingerartiger Vorsprung des hinteren Überdeckungsrandes, unmittelbar an eine Übergangskante vom Überstand zu einem sich daran in Fahrzeughochachsenrichtung nach oben anschließenden Wandbereich (Oberwand) anschließt und/oder von dieser überdeckt ist. Das heißt mit anderen Worten, dass die hintere Kante des Vorsprungs bzw. des hinteren Überdeckungsrandes so weit nach hinten gesetzt wird, dass diese nur noch minimalst von einer hinteren Kante des Überstands überdeckt und damit von hinten her, bei normaler stehender Betrachterposition nicht sichtbar ist.

Für eine besonders vorteilhafte Lichtlenkung und -abstrahlung ist eine Ausführungsform vorteilhaft, bei der dem hinteren Überdeckungsrand und/oder dem wenigstens einem fingerartigen Vorsprung wenigstens ein lichtleitendes und/oder lichtlenkendes Element zugeordnet ist, mittels dem das in den hinteren Überdeckungsrand eingeleitete Licht zum Kennzeichenschild hin abgestrahlt wird. Dabei ist es besonders vorteilhaft, wenn das Licht als gerichtetes und/oder als diffuses Licht abgestrahlt wird.

Insbesondere ist ein Aufbau designtechnisch besonders vorteilhaft, bei dem der Winkel (Lichteinfallswinkel) zwischen einer Verbindungsgeraden von einer in Fahrtrichtung hinteren Kante des lichtabstrahlenden, hinteren Überdeckungsrandes zur Unterkante des Kennzeichenschildes und einer Sichtfläche des Kennzeichenschildes wenigstens 8°, vorzugsweise genau 8° beträgt. Damit ist es möglich, dass der Abstand zwischen einer, zwischen Trägerwand und Überstand ausgebildeten Ansatzkante und der Lichtscheibe, sowie der Abstand zwischen der hinteren Kante des hinteren Überdeckungsrandes und der Übergangskante vom Überstand zu einer sich an den Überstand in Fahrzeughochachsenrichtung nach oben anschließenden Oberwand so gering als konstruktiv möglich zur Minimierung der Überstandstiefe ausgeführt ist. Die Einbeziehung des erfindungsgemäßen lichtabstrahlenden hinteren Überdeckungsrands in die Messung des 8°-Winkels und die Minimierung des oben genannten Abstands ermöglichen eine vorteilhafte Reduzierung der Überstandstiefe, welche insbesondere bessere Designlösungen zulässt.

Konkret können der hintere Überdeckungsrand und/oder die wenigstens eine lichtleitende und/oder lichtlenkende Struktur so ausgebildet sein, dass Licht von einer in Fahrtrichtung hinteren Kante des hinteren Überdeckungsrandes nach unten zum Kennzeichenschild hin abgestrahlt wird, insbesondere die hintere Kante den Bezugspunkt für die Bestimmung des Lichteinfallswinkels bildet.

Besonders einfach und funktionssicher sowie technisch vorteilhaft ist eine Ausführungsform, bei der die dem hinteren Überdeckungsrand zugeordnete lichtleitende und/oder lichtlenkende Struktur durch ein lichtreflektierendes Element, wie zum Beispiel durch eine Verspiegelung, gebildet ist. Konkret kann hierzu vorgesehen sein, dass die dem hinteren Überdeckungsrand zugeordnete lichtleitende und/oder lichtlenkende Struktur im Bereich zwischen dem hinteren Überdeckungsrand und dem diesem zugeordneten Anlagerand angeordnet ist und/oder dort auf den hinteren Überdeckungsrand aufgebracht ist.

Designtechnisch günstig ist ferner ein Aufbau, bei dem der Anlagerand des Ausschnitts, an dem der hintere Überdeckungsrand, vorzugsweise ein hinterer Überdeckungsrand mitsamt wenigstens einem fingerartigen Vorsprung, anliegt, dergestalt um die Lichtscheibendicke zurückversetzt ist, dass ein ebener, unterer Überstandswandbereich ausgebildet wird.

Zur Befestigung der Lichtscheibe stehen dem Fachmann übliche Befestigungsmittel bzw. Halteelemente zur Verfügung. In einer einfachen Ausführungsform können an der Lichtscheibe Klipse zur Halterung im Ausschnitt angeformt sein.

Als Lichtquelle stehen dem Fachmann bekannte Leuchtmittel zur Verfügung, wobei vorzugsweise Glühlampen oder LED's einsetzbar sind.

Die Beleuchtungseinrichtung kann zum Beispiel Bestandteil einer Fahrzeugklappe, insbesondere einer Heckklappe oder einer Kofferraumklappe eines Fahrzeugs, oder Bestandteil eines Stoßfängers sein, je nachdem, wo das Kennzeichenschild angebracht und angeordnet ist.

Ferner kann bzw. können die die Beleuchtungseinrichtung und/oder das Kennzeichenschild tragenden Wandbereiche aus einem Kunststoff und/oder einem Blech hergestellt sein. Wenn der Überstand und die Oberwand sowie die Trägerwand beispielsweise aus geformten Blechen gebildet sind, ist fertigungstechnisch ein Abstand zwischen der hinteren Ausschnittkante und der Übergangskante als Niederhalteransatz für den Fügevorgang erforderlich. Insbesondere bei Kunststoffteilen kann dieser Abstand entfallen, wobei allerdings auch hier zu berücksichtigen ist, dass lichtabstrahlende Beleuchtungsteile so abzudecken sind, dass sie von der Fahrzeugrückseite her nicht unmittelbar zu sehen sind.

Anhand einer Zeichnung werden Ausführungsformen der Erfindung näher erläutert:
Es zeigen:
Fig. 1 einen schematischen Querschnitt durch ein Kraftfahrzeug mit einer Beleuchtungseinrichtung für ein hinteres Kennzeichenschild des Kraftfahrzeugs einer ersten Ausführungsform,
Fig. 2 eine Ansicht von unten auf das Kraftfahrzeug mit einer Beleuchtungseinrichtung für ein hinteres Kennzeichenschild des Kraftfahrzeugs nach Fig. 1 mit zwei alternativen Ausgestaltungen,
Fig. 3 einen schematischen Querschnitt durch ein Kraftfahrzeug mit einer Beleuchtungseinrichtung für ein hinteres Kennzeichenschild des Kraftfahrzeugs einer zweiten Ausführungsform, Fig. 3a eine vergrößerte Darstellung der Einzelheit Z der Fig. 3,
Fig. 4 eine Ansicht von unten auf die Ausführungsform nach Fig. 3 mit zwei alternativen Modifikationen,
Fig. 5 einen schematischen Querschnitt auf ein Kraftfahrzeug mit einer Beleuchtungseinrichtung für ein hinteres Kennzeichenschild des Kraftfahrzeugs nach dem Stand der Technik, und
Fig. 6 eine Ansicht von unten auf das Kraftfahrzeug mit einer Beleuchtungseinrichtung für ein hinteres Kennzeichenschild des Kraftfahrzeugs nach Fig. 5.

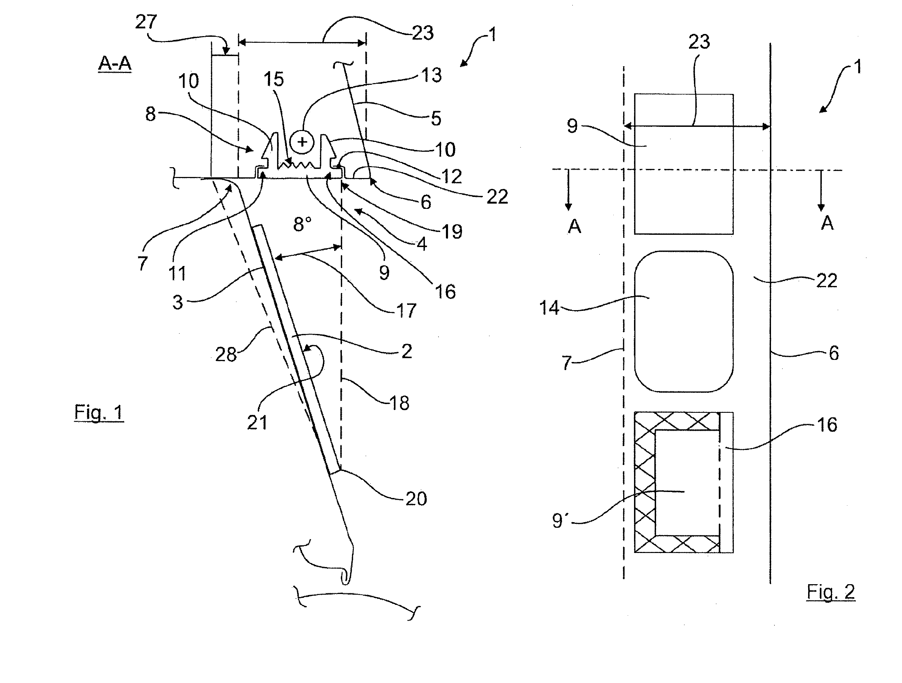

In Fig. 1 ist ein schematischer vertikaler Querschnitt in Fahrzeuglängsrichtung einer beispielhaften Ausführungsform ein erfindungsgemäßes Kraftfahrzeug mit einer Beleuchtungseinrichtung 1 für ein hinteres Kennzeichenschild 2 des Kraftfahrzeugs dargestellt. Vom Kraftfahrzeug ist der das Kennzeichenschild tragende Karosseriewandbereich als Trägerwand 3 und ein an die Trägerwand 3 anschließender Wandbereich als Überstand 4 gezeigt, an den sich ein nach oben gerichteter Karosseriewandbereich als Oberwand 5 anschließt. Der Überstand 4 steht oberhalb des Kennzeichenschildes 2 mit etwa horizontaler Fläche nach hinten ab und geht mit einer Übergangskante 6 in die Oberwand 5 über. Die Trägerwand 3 ist an der Ansatzkante 7, an der der Überstand 4 nach hinten vorspringt hier lediglich beispielhaft schräg nach hinten abgebogen.

Aus dem Schnitt der Fig. 1 ist ersichtlich, dass im Wandbereich des Überstands 4 ein Ausschnitt 8 angebracht ist, in dem von unten her eine lichtdurchlässige Lichtscheibe 9 mit Klipselementen 10 eingesetzt und gehalten ist. Dabei liegt die Lichtscheibe 9 von unten her mit einem umlaufenden Überdeckungsrand 11 an dem den Ausschnitt 8 umgebenden Anlagerand 12 an. Zudem ist oberhalb der Lichtscheibe 9 schematisch eine schaltbare Lichtquelle 13 als Glühlampe einer (nicht näher dargestellten) Leuchte gezeigt.

Aus der Draufsicht auf die Beleuchtungseinrichtung 1 von unten her ist ersichtlich, dass zwei in Längsrichtung des Kennzeichenschilds 2 beabstandete, rechteckige Lichtscheiben 9, 9' vorgesehen sind, zwischen denen hier lediglich beispielhaft ein (schematisch angedeuteter) Handgriff 14 für eine Heckklappenentriegelung angeordnet ist, was selbstverständlich nur dann der Fall sein kann, wenn die Beleuchtungseinrichtung 1 mitsamt Kennzeichenschild 2 an einer Heckklappe angeordnet ist. Es versteht sich, dass die Beleuchtungseinrichtung mitsamt Kennzeichenschild selbstverständlich an jeder geeigneten Stelle angeordnet sein kann, zum Beispiel auch im Stoßfängerbereich eines Fahrzeugs.

Erfindungsgemäß weist die Lichtscheibe 9, 9' lichtleitende und/oder lichtlenkende Elemente auf - hier an der inneren Lichtscheibenoberfläche angeformte Prismenstrukturen 15 -, die so ausgebildet und/oder angeordnet sind, dass von der Lichtquelle 13 durch die Lichtscheibe 9, 9' abgestrahltes Licht sowohl durch die Fläche innerhalb des Überdeckungsrandes 11 zum Kennzeichenschild 2 mit vorbestimmter Leuchtdichte - wenigstens 2,5 cd/m² - abgestrahlt wird, als auch Licht in den Überdeckungsrand 11 oder zumindest in den hinteren Überdeckungsrand 16 der Lichtscheibe 9, 9' geleitet und von dort ebenfalls mit der genannten Leuchtdichte zum Kennzeichenschild 2 hin abgestrahlt wird.

In Fig. 2 ist an der, in der Bildebene oberen Lichtscheibe 9 der Fall gezeigt, dass das Licht mittels der lichtleitenden und/oder lichtlenkenden Elemente so umgelenkt wird, dass der gesamte umlaufende Überdeckungsrand 11 der Lichtscheibe 9 Licht mit ausreichender Leuchtdichte auf das Kennzeichen 2 hin abstrahlt. Mit der (unteren) Lichtscheibe 9' ist der Fall dargestellt, dass lediglich der hintere, hier in Fahrzeugquerrichtung geradlinig verlaufende Überdeckungsrand 16 mit der erforderlichen Lichtumleitung eine ausreichende Lichtabstrahlung aufweist (die nicht bzw. unzureichend abstrahlenden Bereiche des Überdeckungsrandes 11 sind zur besseren Unterscheidung hier mit einer Kreuzschraffur versehen). Mit beiden vorstehenden Möglichkeiten kann die gesetzliche Vorgabe für einen Lichteinfallswinkel 17 von 8° eingehalten werden. Dieser Lichteinfallswinkel 17 wird gemäß Fig. 1 zwischen einer Verbindungsgeraden 18 von einer hinteren Kante 19 des lichtabstrahlenden, hinteren Überdeckungsrands 16 zur Unterkante 20 des Kennzeichenschildes 2 und der Sichtfläche 21 des Kennzeichenschildes 2 gemessen.

Der Überstand 4 und die Oberwand 5 sowie die Trägerwand 3 können aus einem beliebigen Material hergestellt sein, zum Beispiel aus einem Kunststoff- oder einem Blechmaterial. Fertigungstechnisch kann es gegebenenfalls erforderlich sein, dass, zum Beispiel in Verbindung mit Blechen, ein Abstand 22 zwischen der hinteren Ausschnittkante bzw. der hinteren Kante 19 des hinteren Überdeckungsrands 16 und der Übergangskante 6 vorzusehen ist, zum Beispiel als Niederhalteransatz für den Fügevorgang. Um den minimal vorgeschriebenen Lichteinfallswinkel von 8° einhalten zu können ist somit unter Einbeziehung des Abstands 22 wenigstens die eingezeichnete Überstandstiefe 23 erforderlich.

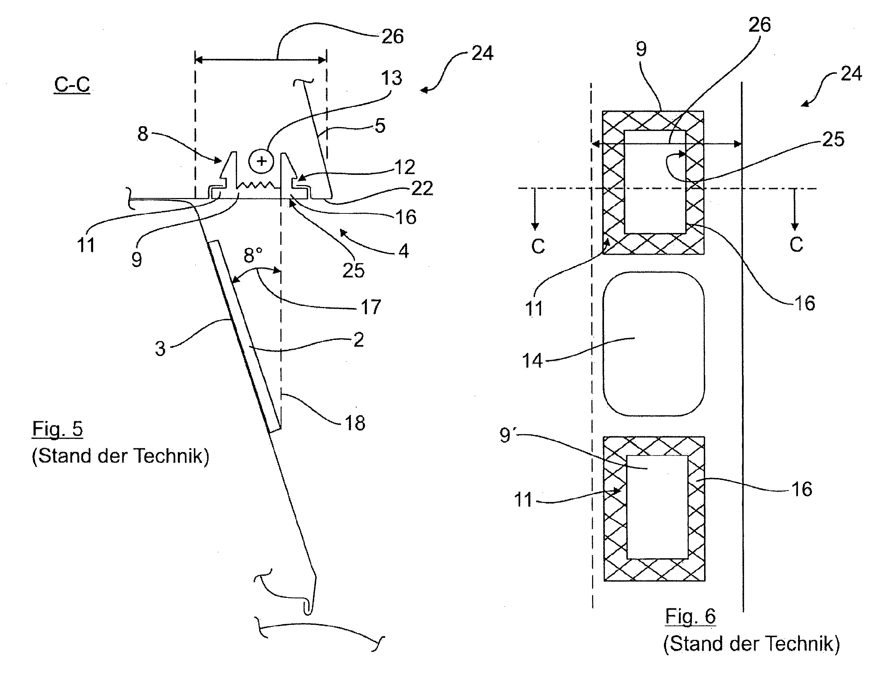

In den Fig. 5 und 6 ist eine ähnliche Beleuchtungseinrichtung 24 nach dem Stand der Technik zur Erläuterung der Unterschiede zu der erfindungsgemäßen Ausführungsform nach den Fig. 1 und 2 gezeigt, wobei gleiche Gegenstände mit gleichen Bezugszeichen versehen sind. Auch in den Fig. 5 und 6 ist die das Kennzeichenschild 2 tragende Trägerwand 3, der Überstand 4 und die Oberwand 5 sowie die Lichtquelle 13 und die Lichtscheibe 9 ersichtlich. Ebenso wie in den Fig. 1 und 2 liegt hier die Lichtscheibe 9 mit dem umlaufenden Überdeckungsrand 11 am zurückversetzten, lichtundurchlässigen Anlagerand 12 des Überstands 4 beziehungsweise des Ausschnitts 8 an. Da hier keine lichtleitenden Elemente für eine seitliche Lichtablenkung, insbesondere keine Prismenstrukturen 15 vorgesehen sind, ist der umlaufende Überdeckungsrand 11 der Lichtscheibe 9, ebenso auch der hintere Überdeckungsrand 16 unbeleuchtet dunkel, beziehungsweise nicht mit der für die Kennzeichenbeleuchtung relevanten ausreichenden Leuchtdichte ausgeleuchtet, wie dies in Fig. 6 schraffiert eingezeichnet ist. Damit kann die zur Bestimmung des minimalen Lichteinfallswinkels von 8° relevante Verbindungsgerade 18 erst an der vorderen, noch beleuchteten Kante 25 des hinteren Überdeckungsrands 16 ansetzen. Zur Einhaltung des Lichteinfallswinkels 17 von 8° ist damit die Trägerwand 3 entsprechend weit in Fahrzeuglängsrichtung nach vorne zu versetzen, wie dies zum Vergleich mit der strichlierten Linie 28 in Fig. 1 eingezeichnet ist. Beim Stand der Technik nach Fig. 5 und Fig. 6 kann somit der minimale Lichteinfallswinkel 27 nur mit einer vergleichsweise großen Überstandstiefe 26 eingehalten werden, die um den Überstandsbetrag 27 größer als die Überstandstiefe 23 der erfindungsgemäßen Ausführungsform nach den Fig. 1 und 2 ist.

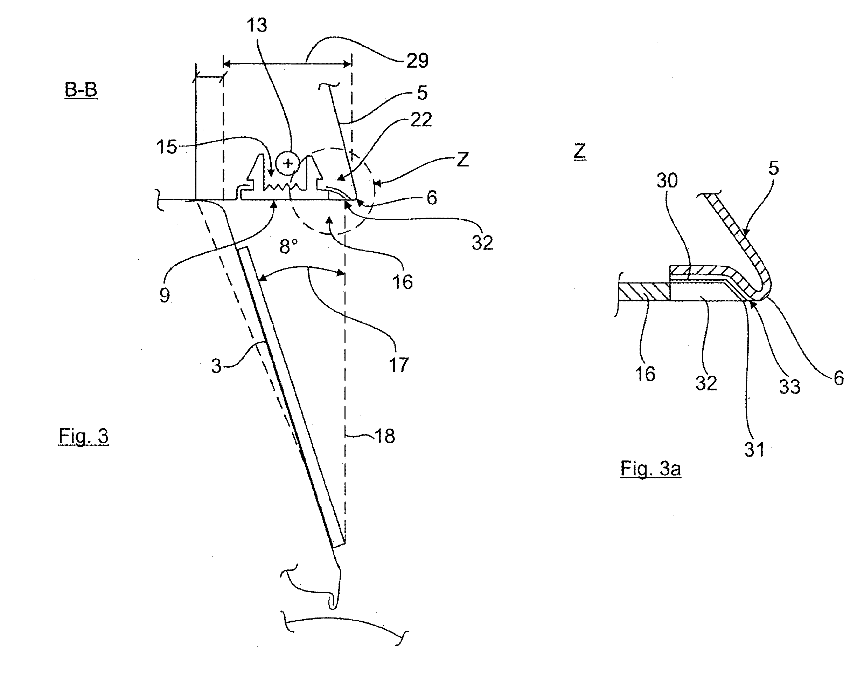

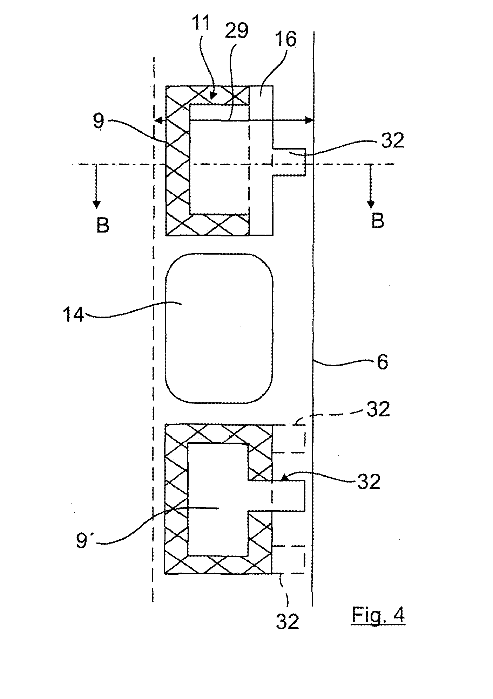

Bei einer weiteren besonders bevorzugten Ausführungsform nach den Fig. 3 und 4 kann gegebenenfalls eine noch weitere Reduzierung der Überstandstiefe 29 im Vergleich zur Überstandstiefe 26 nach dem Stand der Technik und der Überstandstiefe 23 der ersten Ausführungsform erreicht werden:
Dazu ist vorgesehen, dass der hintere, hier im wesentlichen geradlinig und in Fahrzeugquerrichtung verlaufende Überdeckungsrand 16, hier weiter beispielhaft in einem in Fahrzeugquerrichtung gesehen mittleren Bereich, einen von diesem fingerartig in Fahrtrichtung nach hinten abragenden Vorsprung 32 aufweist, in den Licht eingeleitet und von dem aus Licht mit vorbestimmter Leuchtdichte zum Kennzeichenschild 2 abgestrahlt wird. Es können optional selbstverständlich auch mehrere voneinander in Querrichtung beabstandete Vorsprünge 32 vorgesehen sein, zum Beispiel zwei oder mehr, was in der Fig. 4 symbolisch und strichliert dargestellt ist. Ebenso können im Falle mehrerer Vorsprünge 32 diese gleich oder unterschiedlich ausgebildet sein.

Wie dies aus der vergrößerten Detaildarstellung Z der Fig. 3a ersichtlich ist, ist im Bereich der Übergangskante 6 eine anlagerandseitige, den Vorsprung 32 aufnehmende Ausnehmung 33 vorgesehen, in der der Vorsprung 33 vorzugsweise konturangepasst aufgenommen ist. so dass dann dieser Vorsprung 32 bzw. dessen in Fahrtrichtung hintere Kante 31 den Bezugspunkt für die Bestimmung des Lichteinfallswinkels bildet.

Wie dies in der Fig. 4, dort untere Bildhälfte, beispielhaft dargestellt ist, kann das Licht nur in den, dem Vorsprung 32 zugeordneten Bereich des hinteren Überdeckungsrandes 16 sowie in den Vorsprung 32 eingeleitet werden. Alternativ dazu könnte das das Licht aber auch in den gesamten hinteren Überdeckungsrand eingeleitet werden, was in der oberen Bildhälfte der Fig. 4 dargestellt ist.

Wie dies insbesondere auch aus der Fig. 3a gut ersichtlich ist, schließt die in Fahrtrichtung hintere Kante 31 des Vorsprungs 32 des hinteren Überdeckungsrandes 16 unmittelbar an die Übergangskante 6 (zum Beispiel eine Umfalzung) an, die den Vorsprung 32 auch von hinten her überdeckt. Das heißt, dass die hintere Kante 31 des Vorsprungs 32 hier so weit nach hinten gezogen ist, dass diese nur noch minimalst von der Übergangskante 6 des Überstands 4 überdeckt und damit von hinten her, bei normaler stehender Betrachterposition nicht sichtbar ist.

Der hintere Überdeckungsrand 16 oder lediglich ein Teilbereich davon, und/oder der Vorsprung 32 sind vorzugsweise mit einer zum Beispiel Verspiegelung als lichtleitendes und/oder lichtlenkendes Element 30 versehen, mittels dem das in den hinteren Überdeckungsrand 16 und weiter in den Vorsprung 32 eingeleitete Licht noch besser gerichtet zum Kennzeichenschild 2 hin abgestrahlt werden kann.

Ersichtlich kann damit bei Einhaltung des vorgegebenen Lichteinfallswinkels, insbesondere eines 8°-Lichteinfallswinkels, die das Kennzeichenschild 2 tragende Trägerwand 3 noch weiter nach hinten versetzt und die Überstandstiefe 29 noch weitere reduziert werden.

## Patentansprüche

1. Kraftfahrzeug mit einer Beleuchtungseinrichtung für ein hinteres Kennzeichenschild des Kraftfahrzeugs, mit einem das Kennzeichenschild (2) tragenden Karosseriewandbereich als Trägerwand (3), an die sich ein, einen Überstand (4) ausbildender Karosseriewandbereich anschließt, der in Fahrzeughochachsenrichtung oberhalb des Kennzeichenschildes (2) mit etwa horizontaler Fläche nach hinten absteht, sowie mit wenigstens einem überstandseitigen Ausschnitt (8) mit darüber liegender, einschaltbarer Lichtquelle (13), wobei der Ausschnitt (8) von einer lichtdurchlässigen Lichtscheibe (9) dergestalt abgedeckt ist, dass die Lichtscheibe (9) mit einem Überdeckungsrand (11) von unten her einen den Ausschnitt (8) umgebenden Anlagerand (12) überdeckt und dort anliegend befestigt ist, und wobei ein von der Lichtquelle (13) durch die Lichtscheibe (9) abgestrahltes Licht mit vorbestimmter Leuchtdichte durch die Fläche innerhalb des Überdeckungsrands (11) zum Kennzeichenschild (2) abgestrahlt wird, **dadurch gekennzeichnet, dass** die Lichtscheibe (9) wenigstens ein lichtleitendes und/oder lichtlenkendes Element (15, 30) aufweist, das so angeordnet und/oder ausgebildet ist, dass auch Licht in zumindest einen Teilbereich des in Fahrtrichtung hinteren Überdeckungsrands (16) der Lichtscheibe (9) geleitet und von dort ebenfalls mit vorbestimmter Leuchtdichte zum Kennzeichenschild (2) hin abgestrahlt wird.

2. Kraftfahrzeug nach Anspruch 1, **dadurch gekennzeichnet, dass** das wenigstens eine lichtleitende und/oder lichtlenkende Element durch wenigstens ein, an wenigstens einer Oberfläche der Lichtscheibe (9) angeformte und/oder angebrachte und/oder ins Material der Lichtscheibe (9) integrierte Lichtstreustruktur (15), insbesondere durch wenigstens eine prismatische Struktur, gebildet ist, mit der Licht seitlich in zumindest einen Teilbereich des hinteren Überdeckungsrandes (16) ablenkbar ist, von welchem ausgehend das Licht in Richtung zum Kennzeichenschild (2) hin abstrahlbar ist.

3. Kraftfahrzeug nach Anspruch 1 oder 2, **dadurch gekennzeichnet, dass** der hintere Überdeckungsrand (16), vorzugsweise ein im wesentlichen geradlinig und/oder in Fahrzeugquerrichtung verlaufender Überdeckungsrand (16), wenigstens einen von diesem fingerartig in Fahrtrichtung nach hinten abragenden Vorsprung (32) aufweist, in den Licht eingeleitet und von dem aus Licht mit vorbestimmter Leuchtdichte zum Kennzeichenschild (2) abstrahlbar ist.

4. Kraftfahrzeug nach Anspruch 3, **dadurch gekennzeichnet, dass** das wenigstens eine lichtleitende und/oder lichtlenkende Element (15) so ausgebildet und/oder angeordnet ist, dass das Licht in den gesamten hinteren Überdeckungsrand (16) mitsamt dem wenigstens einen Vorsprung (32) eingeleitet wird oder dass das Licht nur in den, dem wenigstens einen Vorsprung (32) zugeordneten Bereich des hinteren Überdeckungsrandes (16) eingeleitet wird.

5. Kraftfahrzeug nach einem der vorhergehenden Ansprüche, **dadurch gekennzeichnet, dass** eine in Fahrtrichtung hintere oder hinterste Kante (19) des hinteren Überdeckungsrandes (16), vorzugsweise ein fingerartiger Vorsprung (32) des hinteren Überdeckungsrandes, unmittelbar an eine Übergangskante (6) vom Überstand (4) zu einem sich daran in Fahrzeughochachsenrichtung nach oben anschließenden Wandbereich (Oberwand 5) anschließt und/oder von dieser Übergangskante (6) überdeckt ist.

6. Kraftfahrzeug nach einem der vorhergehenden Ansprüche, **dadurch gekennzeichnet, dass** dem hinteren Überdeckungsrand (16), und/oder dem wenigstens einem fingerartigen Vorsprung (32) wenigstens ein lichtleitendes und/oder lichtlenkendes Element (30) zugeordnet ist, mittels dem das in den hinteren Überdeckungsrand (16) eingeleitete Licht, insbesondere gerichtet und/oder als diffuses Licht, zum Kennzeichenschild (2) hin abgestrahlt wird.

7. Kraftfahrzeug nach einem der vorhergehenden Ansprüche, **dadurch gekennzeichnet, dass** der Winkel (Lichteinfallswinkel 17) zwischen einer Verbindungsgeraden (18) von einer in Fahrtrichtung hinteren Kante (19) des lichtabstrahlenden, hinteren Überdeckungsrandes (16) zur Unterkante (20) des Kennzeichenschildes (2) und einer Sichtfläche (21) des Kennzeichenschildes (2) wenigstens 8°, vorzugsweise genau 8° beträgt.

8. Kraftfahrzeug nach einem der vorhergehenden Ansprüche, **dadurch gekennzeichnet, dass** der hintere Überdeckungsrand (16) und/oder die wenigstens eine lichtleitende und/oder lichtlenkende Struktur (30) so ausgebildet ist oder sind, dass Licht von einer in Fahrtrichtung hinteren Kante (19) des hinteren Überdeckungsrandes (16) nach unten zum Kennzeichenschild (2) hin abgestrahlt wird, insbesondere die hintere Kante (16) den Bezugspunkt für die Bestimmung des Lichteinfallswinkels (17) bildet.

9. Kraftfahrzeug nach Anspruch 8, **dadurch gekennzeichnet, dass** die dem hinteren Überdeckungsrand (16) zugeordnete lichtleitende und/oder lichtlenkende Struktur (30) durch ein lichtreflektierendes Element (30), insbesondere durch eine Verspiegelung, gebildet ist.

10. Kraftfahrzeug nach Anspruch 8 oder 9, **dadurch gekennzeichnet, dass** die dem hinteren Überdeckungsrand (16) zugeordnete lichtleitende und/oder lichtlenkende Struktur (30) im Bereich zwischen dem hinteren Überdeckungsrand (16) und dem diesem zugeordneten Anlagerand (12) angeordnet ist und/oder dort auf den hinteren Überdeckungsrand (16) aufgebracht ist.

11. Kraftfahrzeug nach einem der vorhergehenden Ansprüche, **dadurch gekennzeichnet, dass** der Anlagerand (12) des Ausschnitts (8), an dem der hintere Überdeckungsrand (16), vorzugsweise ein hinterer Überdeckungsrand (16) mitsamt wenigstens einem fingerartigen Vorsprung (32), anliegt, dergestalt um die Lichtscheibendicke zurückversetzt ist, dass ein ebener, unterer Überstandswandbereich vorliegt.

12. Kraftfahrzeug nach einem der vorhergehenden Ansprüche, **dadurch gekennzeichnet, dass** an die Lichtscheibe (9) Halteelemente, insbesondere Klipse (10), zur vorzugsweise lösbaren Halterung im Ausschnitt (8) angeformt sind.

13. Kraftfahrzeug nach einem der vorhergehenden Ansprüche, **dadurch gekennzeichnet, dass** als Lichtquellen (13) Glühlampen oder LED's verwendet sind.

14. Kraftfahrzeug nach einem der vorhergehenden Ansprüche, **dadurch gekennzeichnet, dass** die Beleuchtungseinrichtung (1) Bestandteil einer Fahrzeugklappe, insbesondere einer Heckklappe oder einer Kofferraumklappe eines Fahrzeugs, oder Bestandteil eines Stoßfängers ist.

15. Kraftfahrzeug nach einem der vorhergehenden Ansprüche, **dadurch gekennzeichnet, dass** die die Beleuchtungseinrichtung (1) und/oder das Kennzeichenschild (2) tragenden Wandbereiche aus einem Kunststoff und/oder einem Blech hergestellt sind.

## Claims

1. Motor vehicle having an illuminating device for a rear licence plate of the motor vehicle, having a body wall region supporting the licence plate (2) as a support wall (3) to which a body wall region forming a protrusion (4) connects, which projects downwards in the vehicle vertical axis direction above the licence plate (2) with an approximately horizontal surface, as well as having at least one protrusion-side section (8) having an activatable light source (13) which lies over this, wherein the section (8) is covered by a light-permeable lens (9) in such a way that the lens (9) overlaps a system edge (12) surrounding the section (8) from below with an overlapping edge (11) and is fastened there to be adjacent, and wherein a light radiated from the light source (13) through the lens (9) is radiated through the surface within the overlapping edge (11) to the licence plate (2) with predetermined light density, **characterised in that** the lens (9) has at least one light-conducting and/or light-deflecting element (15, 30), which is arranged and/or formed such that light is also conducted into at least one partial region of the rear overlapping edge (16) of the lens (9) in the direction of travel and is likewise radiated from there towards the licence plate (2) with predetermined light density.

2. Motor vehicle according to claim 1, **characterised in that** the at least one light-conducting and/or light-deflecting element is formed by at least one light scattering structure (15) formed on and/or attached to at least one surface of the lens (9) and/or integrated into the material of the lens (9), in particular by at least one prismatic structure, with which light is able to be deflected laterally into at least one partial region of the rear overlapping edge (16), originating from which the light is able to be radiated in the direction towards the licence plate (2).

3. Motor vehicle according to claim 1 or 2, **characterised in that** the rear overlapping edge (16), preferably an overlapping edge (16) running in a substantially straight line and/or in the vehicle transverse direction, has at least one projection (32) projecting backwards from this in a finger-like manner in the direction of travel, into which light is introduced and from which light is able to be radiated to the licence plate (2) with predetermined light density.

4. Motor vehicle according to claim 3, **characterised in that** the at least one light-conducting and/or light-deflecting element (15) is formed and/or arranged such that the light is introduced into the entire rear overlapping edge (16) together with the at least one projection (32), or that the light is only introduced into the region of the rear overlapping edge (16) allocated to the at least one projection (32).

5. Motor vehicle according to any one of the preceding claims, **characterised in that** a rear or rearmost edge (19) of the rear overlapping edge (16) in the direction of travel, preferably a finger-like projection (32) of the rear overlapping edge, is connected directly to a transfer edge (6) of the protrusion (4) with respect to a wall region (upper wall 5) which is upwardly adjacent in the vehicle vertical axis direction, and/or is overlapped by this transfer edge (6).

6. Motor vehicle according to any one of the preceding claims, **characterised in that** at least one light-conducting and/or light-deflecting element (30) is allocated to the rear overlapping edge (16) and/or to the at least one finger-like projection (32), by means of which element the light introduced into the rear overlapping edge (16) is, in particular, directed and/or is radiated as diffuse light towards the licence plate (2).

7. Motor vehicle according to any one of the preceding claims, **characterised in that** the angle (angle of light incidence 17) between a straight connection line (18) from one rear edge (19) of the light-radiating, rear overlapping edge (16) in the direction of travel, to the lower edge (20) of the licence plate (2), and a visible surface (21) of the licence plate (2) amounts to at least 8°, preferably exactly 8°.

8. Motor vehicle according to any one of the preceding claims, **characterised in that** the rear overlapping edge (16) and/or the at least one light-conducting and/or light-deflecting structure (30) is or are formed such that light is radiated from a rear edge (19) of the rear overlapping edge (16) in the direction of travel, downwards towards the licence plate (2), in particular the rear edge (16) forms the reference point for the determination of the angle of light incidence (17).

9. Motor vehicle according to claim 8, **characterised in that** the light-conducting and/or light-deflecting structure (30) allocated to the rear overlapping edge (16) is formed by a light-reflecting element (30), in particular by a mirroring.

10. Motor vehicle according to claim 8 or 9, **characterised in that** the light-conducting and/or light-deflecting structure (30) allocated to the rear overlapping edge (16) is arranged in the region between the rear overlapping edge (16) and the system edge (12) allocated to this and/or is applied there to the rear overlapping edge (16).

11. Motor vehicle according to any one of the preceding claims, **characterised in that** the system edge (12) of the section (8), onto which the rear overlapping edge (16), preferably a rear overlapping edge (16) together with at least one finger-like projection (32), abuts, is set back by the lens thickness in such a way that a level, lower protrusion wall region is present.

12. Motor vehicle according to any one of the preceding claims, **characterised in that** retaining elements, in particular clips (10), for preferably releasable retention in the section (8) are formed on the lens (9).

13. Motor vehicle according to any one of the preceding claims, **characterised in that** light bulbs or LEDs are used as light sources (13).

14. Motor vehicle according to any one of the preceding claims, **characterised in that** the illuminating device (1) is a component of a vehicle hatch, in particular a tailgate or a boot lid of a vehicle, or a component of a bumper.

15. Motor vehicle according to any one of the preceding claims, **characterised in that** the wall regions supporting the illuminating device (1) and/or the licence plate (2) are produced from a plastic and/or a metal sheet.

## Revendications

1. Véhicule automobile disposant d'un dispositif d'éclairage de la plaque d'immatriculation arrière du véhicule, comportant une plaque d'immatriculation (2) supportée par une zone de la carrosserie constituant une paroi de support (3) connectée à une partie saillante (4) formée dans la zone de la carrosserie, la partie saillante étant disposée au-dessus de la plaque d'immatriculation (2) et se projetant vers l'arrière avec une surface substantiellement horizontale, au moins une ouverture (8), située sur le côté de la partie saillante, logeant une source lumineuse commutable (13), l'ouverture (8) étant recouverte d'une lentille transparente (9), la lentille (9) contactant par en-dessous le bord d'extrémité (12) entourant l'ouverture (8) avec une extrémité circonférentielle chevauchante (11), la lumière émise provenant de la source lumineuse (13) rayonne via la lentille (9), avec une luminescence prédéterminée, à travers l'extrémité circonférentielle chevauchante (11) en direction de la plaque d'immatriculation (2), **caractérisé en ce que** la lentille (9) comprend au moins un élément conduisant la lumière et/ou un élément déviant la lumière (15, 30) qui est disposé et/ou formé de telle sorte que la lumière est également dirigée vers au moins une portion d'une extrémité circonférentielle chevauchante arrière (16) de la lentille (9) et rayonne depuis celle-ci en direction de la plaque d'immatriculation (2) avec une luminescence prédéterminée.

2. Véhicule automobile selon la revendication 1, **caractérisée en ce qu**'au moins un élément conduisant la lumière et/ou un élément déviant la lumière est formé par au moins une structure de diffusion de la lumière (15), formé et/ou fixé à au moins une surface supérieure de la lentille (9) et/ou en une matière de la lentille (9), en particulier à partir d'au moins une structure prismatique, configuré pour défléchir latéralement la lumière en direction d'au moins une portion de l'extrémité circonférentielle chevauchante arrière (16), à partir de laquelle la lumière déviée est ensuite rayonnée en direction de la plaque d'immatriculation (2).

3. Véhicule automobile selon la revendication 1 ou 2, **caractérisée en ce que** l'extrémité circonférentielle chevauchante arrière (16), de préférence l'extrémité circonférentielle chevauchante arrière (16) s'étendant substantiellement suivant une ligne droite et/ou suivant une direction transversale au véhicule, comprend au moins une protubérance (32) en forme de doigt s'étendant vers l'arrière par rapport au sens de déplacement du véhicule, la lumière étant introduite dans la protubérance en forme de doigt et rayonnant à partir de ladite protubérance avec une luminescence prédéterminée en direction de la plaque d'immatriculation (2).

4. Véhicule automobile selon la revendication 3, **caractérisée en ce qu**'au moins l'élément (15) conduisant la lumière et/ou déviant la lumière est formé et/ou arrangé de telle sorte que la lumière est introduite dans toute l'extrémité circonférentielle chevauchante arrière (16) incluant au moins la protubérance (32) ou de telle sorte que la lumière est introduite seulement dans la zone de la protubérance (32) de la zone de l'extrémité circonférentielle chevauchante arrière (16).

5. Véhicule automobile selon l'une des revendications précédentes, **caractérisée en ce qu**'un bord arrière ou qu'un bord plus en arrière (19), par rapport au sens de déplacement du véhicule, de l'extrémité circonférentielle chevauchante arrière (16), de préférence une protubérance (32) en forme de doigt de l'extrémité circonférentielle chevauchante arrière, est en butée directement sur ou est recouverte par un bord de transition (6) de la partie saillante (4) s'étendant depuis la protubérance vers une paroi supérieure (5) et/ou du bord de transition (6) qui bute en ascension dans la direction axiale verticale du véhicule.

6. Véhicule automobile selon l'une des revendications précédentes, **caractérisée en ce qu**'au moins l'élément conduisant la lumière et/ou un élément déviant la lumière (30) est associé avec l'extrémité circonférentielle chevauchante arrière (16) et/ou la protubérance en forme de doigt (32), l'élément (30) conduisant la lumière et/ou déviant la lumière est configuré pour rayonner la lumière introduite dans l'extrémité circonférentielle chevauchante arrière (16) en direction de la plaque d'immatriculation (2), en particulier en tant que lumière orientée et/ou en tant que lumière diffuse.

7. Véhicule automobile selon l'une des revendications précédentes, **caractérisée en ce que** l'angle (l'angle d'incidence de la lumière 17) entre une ligne droite de connexion (18) s'étendant depuis le bord arrière (19) de l'extrémité circonférentielle chevauchante arrière (16) suivant le sens de déplacement du véhicule vers le bord inférieur (20) de la plaque d'immatriculation (2) et une surface visible (21) de la plaque d'immatriculation est d'au moins 8°, de préférence exactement 8°.

8. Véhicule automobile selon l'une des revendications précédentes, **caractérisée en ce que** l'extrémité circonférentielle chevauchante arrière (16) et/ou au moins la structure (30) conduisant la lumière et/ou déviant la lumière est formé de telle sorte que la lumière provenant du bord arrière (19) de l'extrémité circonférentielle chevauchante arrière (16) rayonne dans le sens de déplacement du véhicule et vers le bas en direction de la plaque d'immatriculation (2), en particulier l'extrémité circonférentielle chevauchante arrière (16) forme un point de référence pour déterminer l'angle d'incidence de la lumière (17).

9. Véhicule automobile selon la revendication 8, **caractérisée en ce que** l'extrémité circonférentielle chevauchante arrière (16) est formée pour constituer une structure (30) conduisant la lumière et/ou déviant la lumière via un élément (30) réfléchissant la lumière, en particulier via un revêtement de réflexion.

10. Véhicule automobile selon la revendication 8 ou 9, **caractérisée en ce que** l'extrémité circonférentielle chevauchante arrière (16) est arrangée pour constituer une structure (30) conduisant et/ou déviant la lumière dans une zone entre l'extrémité circonférentielle chevauchante arrière (16) et le bord de contact (12) et/ou est fixée sur l'extrémité circonférentielle chevauchante arrière (16).

11. Véhicule automobile selon l'une des revendications précédentes, **caractérisée en ce que** le bord de contact (12) de l'ouverture (8), en contact avec l'extrémité circonférentielle chevauchante arrière (16), de préférence avec toute l'extrémité circonférentielle chevauchante arrière (16) incluant au moins la protubérance (32) en forme de doigt, est disposé en retrait du fait de l'épaisseur de la lentille afin de réaliser une zone de paroi protubérante basse et plane.

12. Véhicule automobile selon l'une des revendications précédentes, **caractérisée en ce que** la lentille (9) comprend des éléments de retenue, de préférence consistant en des clips (10), de préférence des fixations amovibles formées dans l'ouverture (8).

13. Véhicule automobile selon l'une des revendications précédentes, **caractérisée en ce que** la source lumineuse (13) comprend une lampe incandescente ou une LED.

14. Véhicule automobile selon l'une des revendications précédentes, **caractérisée en ce que** le dispositif d'éclairage (1) est une partie d'un ouvrant du véhicule, en particulier consiste en un haillon ou l'ouvrant du coffre d'un véhicule, ou une partie du pare-chocs.

15. Véhicule automobile selon l'une des revendications précédentes, **caractérisée en ce que** le dispositif d'éclairage (1) et/ou les zones de parois supportant la plaque d'immatriculation (2) sont fabriqués en plastique et/ou en plaque métallique.
